# EUROPEAN PATENT APPLICATION

(11) **EP 4 678 685 A1**
(43) Date of publication of application: **14.01.2026**
(21) Application number: 23933106.9
(22) Date of filing: 20.11.2023
(51) Int. Cl.: C08J 5/18, B29C 41/24

(54) **METHOD FOR MANUFACTURING SHEET, APPARATUS FOR MANUFACTURING SHEET, AND SHEET**

(30) Priority: 11.04.2023 JP 2023064248
(71) Applicant: The Japan Steel Works, Ltd., Tokyo 141-0032 (JP)
(72) Inventor: ISHIGURO, Ryo, Tokyo 141-0032 (JP); KIMURA, Koichi, Tokyo 141-0032 (JP)
(74) Representative: Simmons & Simmons LLP (Munich)
(86) International application number: PCT/JP2023/041676
(87) International publication number: WO 2024/214332

(57) **Abstract**

In the present invention, a sheet is stably manufactured even when using a liquid material having a low viscosity. This method for manufacturing a sheet comprises: (a) a step for making adjustment to a liquid material LM containing a raw material so as to have a viscosity of 100000 mPa·s or less; (b) a step for performing, by means of a coating machine 13 and in a sheet-like manner, coating using the liquid material LM to form a coating body; (c) a step for solidifying the coating body to obtain a sheet 50; and (d) a step for winding the sheet 50.

## Description

### TECHNICAL FIELD

The present invention relates to a sheet manufacturing method, a sheet manufacturing apparatus, and a sheet.

### BACKGROUND ART

As the sheet manufacturing method, a manufacturing method of melting a raw material using an extruder and extruding an obtained molten resin to have a sheet shape from an extrusion molding die (T-die) has been widely publicly-known (see, for example, Patent Document 1 (Japanese Patent Application Laid-Open Publication No. 2020-146853)).

### RELATED ART DOCUMENT

### PATENT DOCUMENT

Patent Document 1 : Japanese Patent Application Laid-Open Publication No. 2020-146853

### SUMMARY OF THE INVENTION

### PROBLEMS TO BE SOLVED BY THE INVENTION

Incidentally, in this extruded molten resin, a predetermined distance (air gap) is provided from the extrusion molding die (T-die) to a cooling roll, and thus, the air gap distance has a phenomenon that is called "neck-in" causing an obtained film width to be narrower than a die width due to a self-weight, tension, speed, etc. of the molten resin.

At this time, if a viscosity of the molten resin is low, a neck-in amount tends to be large, and it may be difficult to manufacture a sheet having a desired shape.

Accordingly, an objective of the present invention in manufacturing a sheet made of a resin material is to provide a sheet manufacturing method and a sheet manufacturing apparatus capable of providing a sheet having a desired shape even if a viscosity of a liquid material containing a raw material is low. Other problems and novel characteristics will be apparent from the description of the specification and the accompanying drawings.

### MEANS FOR SOLVING THE PROBLEMS

A sheet manufacturing method according to one embodiment includes: a step (a) of adjusting a liquid material containing a raw material and having a viscosity of 100000 mPa·s or less; a step (b) of applying the liquid material to have a sheet shape by a coater, thereby forming a coating body; a step (c) of solidifying the coating body, thereby providing a sheet; and a step (d) of winding up the sheet.

A sheet manufacturing apparatus according to one embodiment includes: a raw material container in which a liquid material containing a raw material and having a predetermined viscosity is adjusted and stored; a coater applying the liquid material; a solidification region in which an applied coating body is solidified, thereby providing a sheet; and a sheet winder winding up the sheet.

In the above-described sheet manufacturing method and sheet manufacturing apparatus, the liquid material is adjusted such that the viscosity thereof is 100000 mPa·s or less.

### EFFECTS OF THE INVENTION

According to one embodiment, in a case of use of an extrusion molding die (T-die) for manufacturing the sheet, the sheet can be stably manufactured even if a liquid material having a viscosity causing a large neck-in amount is used.

### BRIEF DESCRIPTIONS OF THE DRAWINGS

[FIG. 1] is a diagram illustrating a schematic configuration of a sheet manufacturing apparatus according to a first embodiment.
[FIG. 2] is a diagram for explaining a case of application of a gravure roll to a coater in FIG. 1.
[FIG. 3] is a diagram illustrating a schematic configuration of a sheet manufacturing apparatus according to a second embodiment.
[FIG. 4] is a diagram illustrating a schematic configuration of a sheet manufacturing apparatus according to a third embodiment.
[FIG. 5] is a diagram illustrating a modification example of the sheet manufacturing apparatus illustrated in FIG. 4.
[FIG. 6] is a diagram illustrating a chemical structural formula of glucomannan.
[FIG. 7] is a diagram illustrating a chemical structural formula of cellulose.
[FIG. 8] is a diagram illustrating a schematic configuration of a moisture collection apparatus using a nonwoven fabric sheet.
[FIG. 9] is a diagram illustrating a schematic configuration of the moisture collection apparatus using the nonwoven fabric sheet.

### DETAILED DESCRIPTION OF PREFERRED EMBODIMENTS

Hereinafter, the present embodiments will be described in detail with reference to the drawings. Note that components having the same function are denoted with the same reference symbols throughout all the drawings for describing the embodiments, and the repetitive description thereof will be omitted.

### (First Embodiment)

### <Sheet Manufacturing Apparatus>

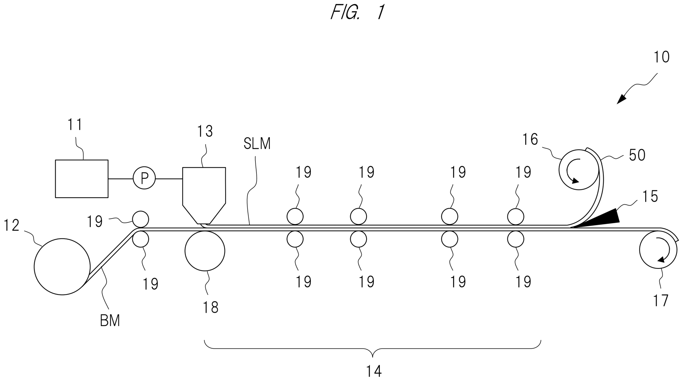

FIG. 1 is a diagram schematically illustrating a configuration of a sheet manufacturing apparatus according to the present embodiment.

This sheet manufacturing apparatus 10 illustrated in FIG. 1 includes: a raw material container 11 in which a liquid material containing a raw material and having a viscosity of 100000 mPa·s or less is adjusted and stored; a base material carry-out part 12 feeding a base material BM; a coater 13 applying the liquid material onto the base material BM fed from the base material carry-out part 12; a solidification region 14 in which the liquid material applied on the base material BM is solidified, thereby providing a sheet; a peeling member 15 arranged at a post stage of the solidification region 14 and used for peeling a sheet 50 from the base material BM; and a sheet winder 16 winding up the sheet 50 peeled from the base material BM. Further, the sheet manufacturing apparatus 10 includes a base material winder 17 winding up the base material BM from which the sheet has been peeled.

The raw material container 11 is a container in which a liquid material containing a raw material and having a viscosity of 100000 mPa·s or less is adjusted and stored. The liquid material stored in this raw material container 11 can also be rephrased as a coating solution to be applied onto the base material BM by the coater 13 described later.

In this raw material container 11, the liquid material is adjusted to contain the raw material and have the viscosity of 100000 mPa·s or less. For example, if the raw material satisfies the above-described viscosity when being heated and melted, only the raw material can be stored in the raw material container 11. In this case, for the viscosity adjustment, a heating part that heats the raw material to satisfy the above-described viscosity may be included. This heating part is, for example, a heating source such as a heater, and the raw material may be heated by this heating source to keep the temperature thereof in the raw material container 11.

In addition, adjustment can also be made by mixing the raw material with a solvent to provide the liquid material having the viscosity of 100000 mPa·s or less. For example, if the raw material must be heated at a significantly high temperature so as to be heated and melted as described above or if it is difficult to achieve the viscosity to 100000 mPa·s even by the heating and melting, the viscosity can be adjusted to 100000 mPa·s or less by dissolving the raw material using the solvent. In addition, even in a raw material causing the viscosity of 100000 mPa·s or less by the heating and melting, the viscosity can also be adjusted using the solvent.

For providing a raw material solution from the mixture of the raw material and the solvent as described above, for example, a solvent supply part for supplying the solvent to this raw material container 11 is arranged to adjust a supply amount of the solvent such that the raw material solution (liquid material) is within the above-described viscosity range.

Note that the viscosity of the liquid material described here is the viscosity of the coating solution to be applied by the coater 13, and is preferably 10 to 80000 mPa·s, and more preferably 100 to 10000 mPa·s.

The base material carry-out part 12 is a member having a configuration for feeding the base material BM. Here, the base material BM is a base material to be coated with the above-described liquid material. In this base material carry-out part, the base material BM is wound in a roll shape, and the base material BM is continuously fed to the coater 13 so that its surface can be coated with the liquid material.

The coater 13 is an apparatus that applies the liquid material fed from the raw material container 11 by using a pump or the like onto the base material BM. As this coater 13, a publicly-known coater used for sheet molding can be used. For example, coaters such as a die coater, a gravure coater, and a bar coater that is of a type performing contact coating processing are exemplified. By the coater 13, the liquid material can be applied with a uniform width onto the base material BM. These coaters can be selected depending on, for example, the viscosity of the liquid material.

FIG. 1 illustrates a case of application of the die coater to this coater 13. In this case, a die coater of a slot die type that applies the liquid material onto the base material BM while extruding the liquid material from a die head is preferable. At this time, a back roll 18 is arranged, the back roll 18 being at a position facing a slit for discharging the liquid material of the coater 13 across the base material.

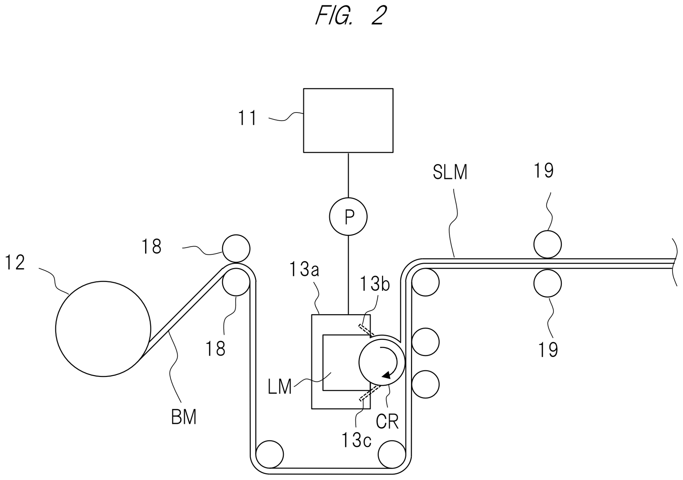

In addition, FIG. 2 illustrates a case of application of the gravure coater to the coater 13. FIG. 2 is a diagram illustrating a configuration that applies a liquid material LM onto the base material BM by using the gravure coater in the sheet manufacturing apparatus 10. Here, a cross-sectional structure of the gravure coater is illustrated to make its internal configuration understandable.

This gravure coater illustrated in FIG. 2 is a vertical-type coater, in which a chamber (tank) 13a is arranged in a vertical direction (that is a direction parallel to a gravity direction). This coater includes: the chamber (tank) 13a for storing the liquid material LM; a coating roll (gravure roll) CR having its portion immersed in the chamber (tank) 13a; a blade 13b for preventing spill of the liquid material LM and adjusting a liquid amount on a roll surface; and a second blade 13c for preventing leakage of the liquid material in the chamber (tank) and a coating solution from a gap between itself and the coating roll (gravure roll) CR.

The first blade 13b is arranged on a side of a rotation direction of the coating roll CR, such that an angle and a pressing pressure of the first blade 13b can be adjusted to adjust the liquid amount of the liquid material LM adhering to a surface of the coating roll CR. And, the liquid material LM adhering to the surface of the coating roll CR is transferred to the surface of the base material BM, thereby forming a sheet-shaped liquid material SLM.

Note that the chamber (tank) 13a of the gravure coater may be of either the vertical type or a horizontal type. The case of the horizontal type does not need the second blade 13c for preventing the leakage of the coating solution, and can provide a configuration only including the first blade 13b for preventing the spill of the liquid material LM and adjusting the liquid amount on the roll surface.

The solidification region 14 is a region where a sheet-shaped liquid material applied on the base material BM is solidified, thereby providing a sheet. In this solidification region 14, if the liquid material is made of only the raw material, a temperature of the sheet-shaped raw material applied on the base material BM is decreased such that it is solidified. At this time, for example, cooling means is not particularly arranged, and the temperature of the sheet-shaped raw material can be naturally decreased at room temperature of about 25°C or the like such that it is solidified. Alternatively, the cooling means may be arranged, and the temperature of the sheet-shaped raw material may be actively decreased such that it is solidified.

Alternatively, if the liquid material is the raw material solution made of mixture of the raw material and the solvent, the solvent in the sheet-shaped liquid material applied on the base material BM is vaporized by heating or the like, such that it is solidified. At this time, heating means is not particularly arranged, and the solvent can be naturally vaporized at room temperature or the like such that it is solidified. Alternatively, the heating means such as the heater may be arranged, and the sheet-shaped raw material may be actively heated to accelerate the vaporization of the solvent such that it is solidified.

The peeling member 15 is a member arranged at a post stage of the above-described solidification region 14 and used for peeling the sheet 50, provided in the solidification region 14 by the solidification, from the base material BM. This peeling member 15 only needs to separate the sheet 50 from the base material BM, and a publicly-known peeling member can be used. An example of this peeling member 15 is a scraper or the like, a tip portion of which is provided at an acute angle and is inserted into a gap between the base material BM and the sheet 50 to peel the sheet 50 from the base material BM.

The sheet winder 16 is a member that can wind up the sheet 50 peeled from the base material BM by the peeling member 15 and that can house the sheet 50 as a roll-shaped sheet. The sheet 50 wound up here can be provided as a product as a roll-shaped sheet. In addition, this sheet can be further processed to be provided as a sheet product, as needed.

The base material winder 17 is a member that can wind up the base material BM from which the sheet 50 has been peeled by the peeling member 15 and that can house the base material BM as a roll-shaped sheet. The base material BM wound up here can be used as the base material BM again to manufacture the sheet 50. At this time, it is particularly preferable to, for example, clean the surface, on which the sheet 50 is formed, so as to prevent occurrence of the raw material residual, as needed.

In addition, a feeding roll 19 is preferably provided between the base material carry-out part 12 and the base material winder 17 such that the base material BM can be stably fed. The feeding roll 19 has a function of sandwiching the base material BM (the base material BM on which the coating body or the sheet 50 has been formed after being coated with the liquid material) and feeding the base material BM to the post stage. In addition, at this time, the coating body or the sheet 50 may be adhered to the base material BM under pressure.

### <Sheet Manufacturing Method>

Next, a sheet manufacturing method according to a first embodiment will be described. This sheet manufacturing method includes: a step (step (a)) of adjusting the liquid material containing the raw material and having the viscosity of 100000 mPa·s or less; a step (step (b)) of molding the liquid material to have a sheet shape after the step (a); a step (step (c)) of solidifying the sheet-shaped liquid material, thereby providing the sheet after the step (b); and a step (step (d)) of winding up the sheet after the step (c).

A sheet manufacturing method using the sheet manufacturing apparatus 10 described in FIG. 1 will be described below as a specific apparatus configuration.

First, the step (step (a)) of adjusting the liquid material containing the raw material and having the viscosity of 100000 mPa·s or less is performed.

In this step of adjusting the viscosity, the liquid material containing the raw material and having the viscosity of 100000 mPa·s or less is adjusted in the raw material container 11, as described above. For example, when the raw material is heated and melted to satisfy the above-described viscosity, only the raw material is stored in the raw material container 11, and the raw material is heated to satisfy the above-described viscosity, to make the viscosity adjustment.

In addition, when the raw material is mixed with the solvent and is adjusted to have the viscosity of 100000 mPa·s or less, a supply amount of the solvent is adjusted such that the raw material solution (liquid material) provided by mixing the solvent with the raw material is within the above-described viscosity range. In this case, temperature adjustment such as heating may be combined, as needed.

The viscosity of the liquid material in this step (a) is the viscosity of the coating solution to be applied by the coater 13 as described above, and is preferably 10 to 80000 mPa·s, and more preferably 100 to 10000 mPa·s.

Then, after the step (a), the step (step (b)) of applying the liquid material by the coater to have the sheet shape is performed.

In the present embodiment, the base material carry-out part 12 is provided, and the liquid material is applied to have the sheet shape by the coater 13 onto the base material BM fed from this base material carry-out part 12, thereby providing the sheet-shaped liquid material SLM (coating body).

The base material BM used here is preferably a peeling base material. This base material BM is preferably a base material made of a resin material such as polyethylene (PE), polypropylene (PP), polyethylene terephthalate (PET), polybutylene terephthalate (PBT), or polyphenylene sulfide (PPS).

In addition, a release agent layer may be provided on a surface of the base material BM in order to facilitate the peeling of the sheet 50 from the base material BM. As the release agent used here, a publicly-known release agent can be used, and a silicone-based release agent, a non-silicone-based release agent and the like are exemplified.

In addition, to the base material BM, a process for enhancing surface tension by corona discharge or the like is also preferably performed before the next coating with the liquid material. When such a process is performed, the corona discharge process is preferably performed such that the surface tension in the case of polyethylene terephthalate (PET) is in a range of 50 to 70 dyn/cm while the surface tension in the case of polyphenylene sulfide (PPS) is in a range of 60 to 80 dyn/cm.

At this time, the application amount of the liquid material LM may be adjusted depending on the thickness of the sheet 50 to be finally formed, and the thickness of the sheet-shaped liquid material SLM may be determined. That is, when the liquid material LM is made of only the raw material, the sheet-shaped liquid material SLM immediately after the application becomes the sheet 50 without the large thickness change, and thus, is applied to have the same thickness as a target thickness. Alternatively, when the raw material solution made of the mixture of the raw material and the solvent is used as the liquid material LM, the sheet-shaped liquid material SLM immediately after the application and the resultant sheet 50 differ from each other in thickness. This is because the solvent is vaporized in forming the sheet 50. In consideration of its vaporized content, the raw material solution (liquid material) is applied such that the sheet 50 has the target thickness.

In the application of the liquid material LM, the thickness of the sheet-shaped liquid material SLM to be applied is changed by various factors such as a carry speed of the base material, the viscosity of the liquid material LM to be used, and a discharge amount of the liquid material LM in the coater 13. Accordingly, these application conditions may be adjusted to achieve the above-described target thickness.

The viscosity of the liquid material LM is set to 100000 mPa·s or less, as described above. The carry speed of the base material is, for example, preferably 1 to 500 m/min., and more preferably 5 to 300 m/min.

Note that the coater 13 is preferably selected depending on the viscosity of the liquid material LM. For example, a die coater is preferably used as the coater 13 when the viscosity of the liquid material LM is 1000 mPa·s or more, or a gravure coater is preferably used as the coater 13 when the viscosity of the liquid material LM is less than 1000 mPa·s. In addition, if the viscosity of the liquid material LM is 10000 mPa·s or more, a screw-shaped apparatus such as a single-screw extruder or a twinscrew extruder is preferably used instead of a pump.

Further, after the step (b), the step (step (c)) of solidifying the sheet-shaped liquid material, thereby providing the sheet 50, is performed.

In the present embodiment, the liquid material applied on the base material BM is solidified, thereby providing a sheet-shaped object in which the base material BM and the sheet 50 are stacked. Here, the liquid material is solidified in the solidification region 14.

If the liquid material is made of only the raw material, the sheet-shaped raw material applied on the base material BM is solidified by decrease in the temperature thereof. At this time, for example, cooling means is not particularly arranged, and the temperature of the sheet-shaped raw material can be naturally decreased at room temperature or the like such that it is solidified. Alternatively, the cooling means may be arranged, and the temperature of the sheet-shaped raw material may be actively decreased such that it is solidified.

A solidification temperature at this time is specific to the raw material to be used, and may be a temperature lower than a glass transition point of the raw material or a melting point thereof. Because of such a temperature, the liquid raw material is solidified, thereby providing the sheet.

Alternatively, if the liquid material is the raw material solution made of mixture of the raw material and the solvent, the solvent in the sheet-shaped liquid material applied on the base material BM is vaporized by heating or the like, such that it is solidified. At this time, the solvent may be naturally vaporized at room temperature or the like. Alternatively, in order to improve the manufacturing efficiency, preferably, the heating means such as the heater may be arranged, and the sheet-shaped raw material may be heated to accelerate the vaporization of the solvent such that it is solidified.

At this time, the sheet manufacturing apparatus 10 illustrated in FIG. 1 provides the stacking of the sheet 50 on the base material BM, and the sheet 50 can be peeled from the base material BM by using the peeling member 15 such as the scraper. By such a peeling operation, the sheet 50 physically independent of the base material BM is provided.

Then, after this peeling, the step (step (d)) of winding up the sheet 50 is performed. Here, by the sheet winder 16, the sheet 50 provided by the peeling from the above-described base material BM is wound up to have the roll shape. In this way, the sheet as the product can be continuously provided.

In addition, at the same time with the sheet winding, the base material BM from which the sheet has been peeled off is wound up to have the roll shape by the base material winder 17. The base material BM wound up here can be used as the base material BM again to manufacture the sheet 50. At this time, it is particularly preferable to, for example, clean the surface, on which the sheet 50 is formed, so as to prevent occurrence of the raw material residual, as needed.

By the configuration of the above embodiment, a sheet manufacturing technique having a wide applicable range can be provided, the technique being capable of preventing the formation of the sheet such as the neck-in shape that is significantly different from the desired shape sheet even when the liquid material having the low viscosity is used as the raw material, thereby significantly reducing the limitation of the raw material that can be used.

### (Second Embodiment)

### <Sheet Manufacturing Apparatus>

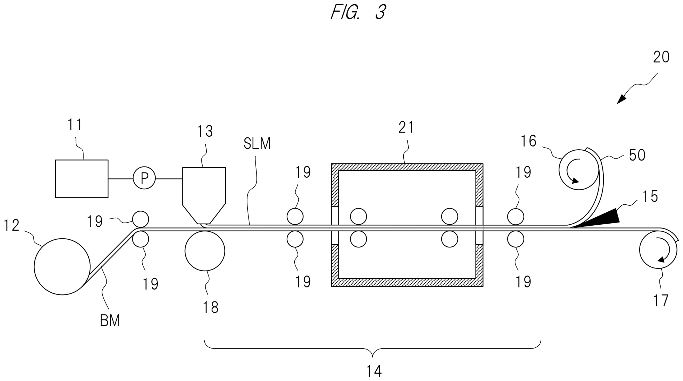

FIG. 3 is a diagram schematically illustrating a configuration of a sheet manufacturing apparatus according to another embodiment.

As similar to the above-described sheet manufacturing apparatus 10, a sheet manufacturing apparatus 20 illustrated in FIG. 3 includes: a raw material container 11 in which a liquid material containing a raw material and having a viscosity of 100000 mPa·s or less is adjusted and stored; a base material carry-out part 12 feeding a base material BM; a coater 13 applying the liquid material onto the base material BM fed from the base material carry-out part 12; a solidification region 14 where the liquid material applied on the base material BM is solidified, thereby providing a sheet; a peeling member 15 arranged at a post stage of the solidification region 14 and used for peeling a sheet 50 from the base material BM; and a sheet winder 16 winding up the sheet 50 peeled from the base material BM. Further, the sheet manufacturing apparatus 20 includes a base material winder 17 winding up the base material BM from which the sheet has been peeled.

And, this sheet manufacturing apparatus 20 differs from the sheet manufacturing apparatus 10 in that it further includes a drying processing part 21. Hereinafter, description of the same configuration will be omitted, and the different configuration will be described in detail.

This sheet manufacturing apparatus 20 includes the drying processing part 21 in addition to the configuration of the sheet manufacturing apparatus 10, as described above. The drying processing part 21 is a member that is arranged in the solidification region 14 and that dries the solvent contained in the sheet-shaped liquid material on the base material BM. That is, this second embodiment is an embodiment with an aspect using the raw material solution (liquid material) made of the mixture of the raw material and the solvent as the liquid material.

This drying processing part 21 is provided to efficiently vaporize the solvent contained in the liquid material discharged onto the base material BM in the step (c). Generally, the inside of the drying processing part 21 is under a heating atmosphere in order to accelerate the vaporization of the solvent. For the heating atmosphere, gas (air, etc.) heated to a temperature set by a heat source such as a heater may be introduced into the drying processing part 21. At this time, an introduction operation for the heated gas is preferably continuously performed such that a temperature in the drying processing part 21 can be kept nearly the set temperature.

As this heating temperature, an optimum temperature can be set depending on the solvent to be used. For example, if water or lower alcohol is used as the solvent, the heating temperature is preferably 50 to 90°C. However, its upper limit value is set to a temperature less than a boiling point of the solvent. By such a temperature range, the vaporization efficiency of the solvent can be significantly improved, and a situation such as occurrence of bubbles in the sheet due to boiling of the solvent can be avoided. In addition, in order to accelerate the vaporization and the drying, an air blower capable of blowing air toward the sheet-shaped liquid material may be provided.

In addition, when the drying processing part 21 is arranged, a solvent collection mechanism that cools, liquefies, and collects the vaporized solvent generated in the drying processing part 21 may be provided. Since this solvent collection mechanism is arranged, the solvent can be reused. Further, the solvent collected here can also be reused while being circulated as a solvent for dissolving the raw material. By such reuse, cost for the sheet manufacturing operation in the present embodiment can be reduced, and the sheet can be efficiently manufactured.

### <Sheet Manufacturing Method>

In the present embodiment, the sheet manufacturing apparatus 20 to be used differs from the sheet manufacturing apparatus 10 in whether or not it includes the drying processing part 21, as described above. Therefore, a basic operation in the sheet manufacturing method is the same as that of the first embodiment.

In addition to the operations of the first embodiment, this second embodiment includes a process of causing the drying processing part 21 to, by heating, vaporize and dry the solvent contained in the liquid material applied on the base material BM, thereby efficiently providing the sheet 50 from the sheet-shaped liquid material SLM. This drying process is performed in the solidification region 14.

A heating temperature of this drying process is preferably a temperature accelerating the vaporization of the solvent to be used as described above, and an optimum temperature is set depending on the solvent to be used. This heating temperature is, for example, preferably 50 to 90°C when water or lower alcohol is used as the solvent. However, its upper limit value is set to a temperature less than a boiling point of the solvent. By such a temperature range, the vaporization efficiency of the solvent can be significantly improved, and a situation such as occurrence of bubbles in the sheet due to boiling of the solvent can be avoided. In addition, in order to accelerate the vaporization and the drying, an air blower capable of blowing air toward the sheet-shaped liquid material may be provided.

In addition, by the solvent collection mechanism as described above, the solvent vaporized by the drying processing part 21 can be collected by being cooled and liquefied. The solvent collected as described above can be reused while being circulated as the solvent for the raw material.

### (Third Embodiment)

### <Sheet Manufacturing Apparatus>

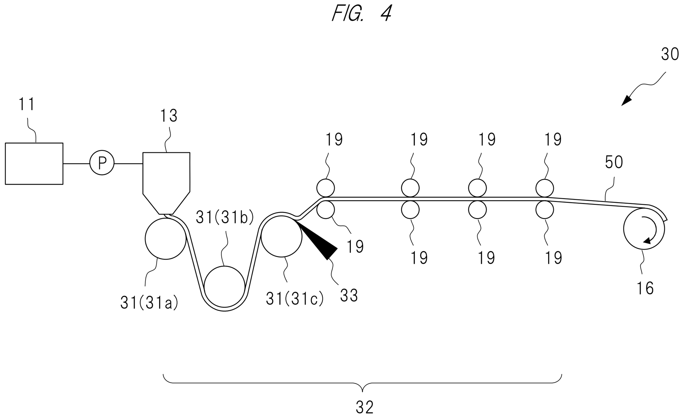

FIG. 4 is a diagram schematically illustrating a configuration of a sheet manufacturing apparatus according to the present embodiment.

A sheet manufacturing apparatus 30 illustrated in FIG. 4 includes: the raw material container 11 in which the liquid material containing the raw material and having the viscosity of 100000 mPa·s or less is adjusted and stored; a heating roll 31 (31a, 31b, 31c); a coater 13 applying the liquid material onto the heating roll 31 (31a); a solidification region 32 where the liquid material applied on the heating roll 31 (31a) is solidified, thereby providing a sheet; a peeling member 33 peeling a sheet 50 from the heating roll 31 (31c); and a sheet winder 16 winding up the sheet 50 peeled from the heating roll 31 (31c).

In this sheet manufacturing apparatus 30, the raw material container 11, the coater 13, the sheet winder 16, and the feeding roll 19 are the same in the configuration as those of the first embodiment, and descriptions thereof will be omitted. In addition, this sheet manufacturing apparatus 30 does not use the base material, and thus, does not include the base material carry-out part 12, the peeling member 15 peeling the sheet 50 from the base material, and the base material winder 17.

In the present embodiment, the heating roll 31 is provided as different from the first embodiment. The present embodiment is configured such that the liquid material is directly applied onto this heating roll 31 (31a) by using the coater 13. The heating roll 31 is a member for heating at a temperature accelerating the vaporization of the solvent contained in the raw material solution (liquid material) applied from the coater 13 such it is solidified.

The number of this heating roll 31 may be plural. By the plurality of heating rolls 31, time taken for the vaporization and the drying of the solvent from the applied liquid material can be secured, and the solidification can be more accelerated. FIG. 4 illustrates an example in which the three heating rolls 31a, 31b, and 31c are provided as the heating roll 31.

The solidification region 32 in this sheet manufacturing apparatus 30 is provided between a portion where the raw material solution (liquid material) is applied onto the heating roll 31 from the coater 13 and the sheet winding portion. In this solidification region 32, a main portion for the drying and the solidification after the vaporization of the solvent is a region with the heating roll 31.

The peeling member 33 is a member that peels the sheet from which the solvent has been vaporized (also including the sheet during the drying) from the heating roll 31 (31c). As a result, only the sheet is independent, and then, this sheet is provided as the sheet 50 to be the final resultant product while being conveyed by the feeding roll 19, and is wound up to have the roll shape by the sheet winder 16.

### <Sheet Manufacturing Method>

Next, a sheet manufacturing method according to a third embodiment will be described. As similar to the first embodiment, this sheet manufacturing method includes: a step (step (a)) of adjusting the liquid material containing the raw material and having the viscosity of 100000 mPa·s or less; a step (step (b)) of molding the liquid material to have the sheet shape after the step (a); a step (step (c)) of solidifying the sheet-shaped liquid material, thereby providing the sheet after the step (b); and a step (step (d)) of winding up the sheet after the step (c).

A sheet manufacturing method using the sheet manufacturing apparatus 30 described in FIG. 4 will be described below as a specific apparatus configuration.

First, the step (step (a)) of adjusting the liquid material containing the raw material and having the viscosity of 100000 mPa·s or less is performed.

In this step of adjusting the viscosity, the liquid material containing the raw material and having the viscosity of 100000 mPa·s or less is adjusted in the raw material container 11, as described above. For example, when the raw material is mixed with the solvent and is adjusted to have the viscosity of 100000 mPa·s or less, a supply amount of the solvent is adjusted such that the raw material solution (liquid material) provided by mixing the solvent with the raw material is within the above-described viscosity range.

The viscosity of the liquid material described here is the viscosity of the coating solution to be applied by the coater 13 as described above, and is preferably 10 to 80000 mPa·s, and more preferably 100 to 10000 mPa·s. Then, after the step (a), the step (step (b)) of molding the liquid material to have the sheet shape is performed.

In the present embodiment, the heating roll 31 is provided, and the liquid material is applied onto this heating roll 31 by the coater 13, thereby molding the liquid material to have the sheet shape.

At this time, the application amount of the liquid material LM may be adjusted depending on the thickness of the sheet 50 to be finally formed, and the thickness of the sheet-shaped liquid material SLM may be determined. That is, if the liquid material is the raw material solution made of the mixture of the raw material and the solvent, the sheet-shaped liquid material SLM immediately after the application and the resultant sheet 50 differ from each other in thickness. This is because the solvent is vaporized in forming the sheet 50. In consideration of its vaporized content, the raw material solution (liquid material) is applied such that the sheet 50 has the target thickness.

In the application of the liquid material, the thickness of the sheet-shaped liquid material SLM to be applied is changed by various factors such as a carry speed (rotation speed) of the heating roll 31, the viscosity of the liquid material to be used, and a discharge amount of the liquid material from the coater 13. Accordingly, these application conditions may be adjusted to achieve the above-described target thickness.

The viscosity of the liquid material is set to 100000 mPa·s or less, as described above. The carry speed of the heating roll 31 is, for example, preferably 1 to 500 m/min., and more preferably 5 to 300 m/min.

Further, after the step (b), the step (step (c)) of solidifying the sheet-shaped liquid material, thereby providing the sheet 50, is performed.

In the present embodiment, the liquid material applied on the heating roll 31 is solidified, thereby providing the sheet 50. Here, the liquid material is solidified in the solidification region 32.

If the liquid material is the raw material solution made of the mixture of the raw material and the solvent, the solvent is vaporized from the sheet-shaped liquid material SLM applied on the heating roll 31 by heating or the like, such that it is solidified. At this time, in order to accelerate the vaporization of the solvent, a heating means such as a heater is provided in the roll, and the sheet-shaped liquid material SLM is heated to accelerate the vaporization of the solvent, such that it is solidified.

In FIG. 4, as the heating roll 31, the three heating rolls 31a, 31b and 31c are provided. First, the sheet-shaped liquid material SLM is discharged from the coater 13 onto the heating roll 31a. This liquid material is heated by being directly in contact with the heating roll 31a. Therefore, immediately after the liquid material is discharged, the solvent contained therein is actively vaporized.

This sheet-shaped liquid material SLM passes through the heating roll 31a, the heating roll 31b, and the heating roll 31c in this order, and is provided as the sheet while its solvent is vaporized and dried by each of the heating rolls. Such passing through the plurality of heating rolls 31 can secure the drying time period.

As this heating temperature of the heating roll 31, an optimum temperature can be set depending on the solvent to be used. For example, if water or lower alcohol is used as the solvent, the heating temperature is preferably 50 to 90°C. However, its upper limit value is set to a temperature less than a boiling point of the solvent. By such a temperature range, the vaporization efficiency of the solvent can be significantly improved, and a situation such as occurrence of bubbles in the sheet due to boiling of the solvent can be avoided. In addition, in order to accelerate the vaporization and the drying, an air blower capable of blowing air toward the sheet-shaped liquid material SLM may be provided.

At this time, in the sheet manufacturing apparatus 30 illustrated in FIG. 4, the solidified sheet 50 is provided on the heating roll 31 (31c), and the sheet 50 is peeled from the heating roll 31 (31c) by using the peeling member 33 such as a scraper. By such a peeling operation, the sheet 50 physically independent of the heating roll 31 (31c) can be provided.

Then, after the peeling, the sheet 50 is conveyed by the feeding roll 19, and then, the step (step (d)) of winding up the sheet 50 is performed. Here, the sheet winder 16 winds up the sheet 50 to have the roll shape. In this way, the sheet as the product can be continuously provided.

By the configuration of the above embodiment, a sheet manufacturing technique having a wide applicable range can be provided, the technique being capable of preventing the formation of the sheet such as the neck-in shape that is significantly different from the desired shape sheet even when the liquid material having the low viscosity is used as the raw material, thereby significantly reducing the limitation of the raw material that can be used.

### [Modification Example]

### <Sheet Manufacturing Apparatus>

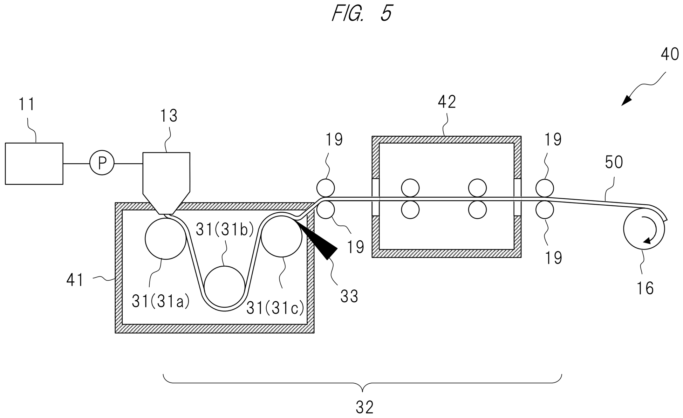

The third embodiment can provide a configuration as described in a sheet manufacturing apparatus 40 illustrated in FIG. 5. This sheet manufacturing apparatus 40 includes the same configuration as that of the sheet manufacturing apparatus 30, and further includes a drying processing part 41 having a heating roll 31 arranged therein and a drying processing part 42 at a portion where the sheet is conveyed by the feeding roll 19. That is, the sheet manufacturing apparatus 40 differs from the sheet manufacturing apparatus 30 in that the drying processing parts 41 and 42 are additionally provided.

The drying processing part 41 is a member arranged in a solidification region 32 and including the heating roll 31 therein. This drying processing part 41 has a function of efficiently vaporizing and drying the solvent contained in the liquid material applied on the heating roll 31.

The heating is preferable such that the inner temperature of the drying processing part 41 is a temperature accelerating the vaporization of the solvent. This heating temperature may be the same as described in the heating foll 31, and an optimum temperature can be set depending on the solvent to be used. For example, if water or lower alcohol is used as the solvent, the heating temperature is preferably 50 to 90°C. However, its upper limit value is set to a temperature less than a boiling point of the solvent. By such a temperature range, the vaporization efficiency of the solvent can be significantly improved, and a situation such as occurrence of bubbles in the sheet due to boiling of the solvent can be avoided. In addition, in order to accelerate the vaporization and the drying, an air blower capable of blowing air toward the sheet-shaped liquid material SLM may be provided.

In addition, when the drying processing part 41 is provided, a solvent collection mechanism that cools, liquefies, and collects the vaporized solvent generated in the drying processing part 41 may be provided. Since this solvent collection mechanism is provided, the solvent collected here can also be reused while being circulated as a solvent for the raw material. By such reuse, cost for the sheet manufacturing operation in the present embodiment can be reduced, and the sheet can be efficiently manufactured.

The drying processing part 42 is a member that is arranged in the solidification region 32 and that further dries a residual solvent in the sheet peeled from the heating roll 31. A configuration of this drying processing part 42 can be the same as that of the drying processing part 21 described in the second embodiment. In the present embodiment, note that the drying processing part 42 is a portion that further performs a drying operation if there is the residual solvent, and that plays an auxiliary role since the drying processing part 41 mainly vaporizes the solvent. Therefore, the drying processing part may include a configuration in which the drying processing part 42 is eliminated while only the drying processing part 41 is provided.

### <Sheet Manufacturing Method>

In this modification example, the sheet manufacturing apparatus 40 to be used differs from the sheet manufacturing apparatus 30 only in whether or not it includes the drying processing parts 41 and 42, as described above. Therefore, a basic operation of the sheet manufacturing method is the same as that in the third embodiment.

In addition to the operations of the third embodiment, this modification example includes a process of causing the drying processing part 41 to vaporize and dry the solvent contained in the liquid material applied on the heating roll 31, thereby efficiently providing the sheet 50 from the sheet-shaped liquid material SLM. This drying process is performed in the solidification region 32.

In addition, the solvent collection mechanism is arranged as described above to cool, liquefy, and collect the vaporized solvent generated in the drying processing part 41. The solvent collected as descried above can be reused while being circulated as a solvent for the raw material.

### <Raw Material>

Next, the raw materials respectively used in the first to third embodiments will be described. Here, the raw materials are not particularly limited, and each may be a liquid material having a viscosity of 100000 mPa·s or less as the liquid material to be applied by the coater 13 as described above. This liquid material may be adjusted by either the melting of the raw material or the mixture with the solvent and the dissolution.

This raw material is, for example, a resin as provided by, for example, injecting a liquid resin of a low viscosity, such as so-called injection-grade and spinning-grade liquid resin, from a die in molding of resin or the like.

Alternatively, a biodegradable material or the like can also be used as the raw material. A water-soluble material is suitable for the biodegradable material in the present invention, and is excellent in not only moldability but also a low environmental load because it is dissolved using water as the solvent to easily provide the liquid material of the low viscosity.

The raw material that can be used in the present embodiment is, for example, polysaccharide, gelatin or the like, and the polysaccharide is, for example, glucomannan, a cellulose-based material, pectin, starch, isomaltodextrin, agar or the like. Either single of one type of them or combination use of two or more types of them is applicable. Particularly, the material preferably contains at least one type selected from the glucomannan, the cellulose-based material, gelatin, and the agar.

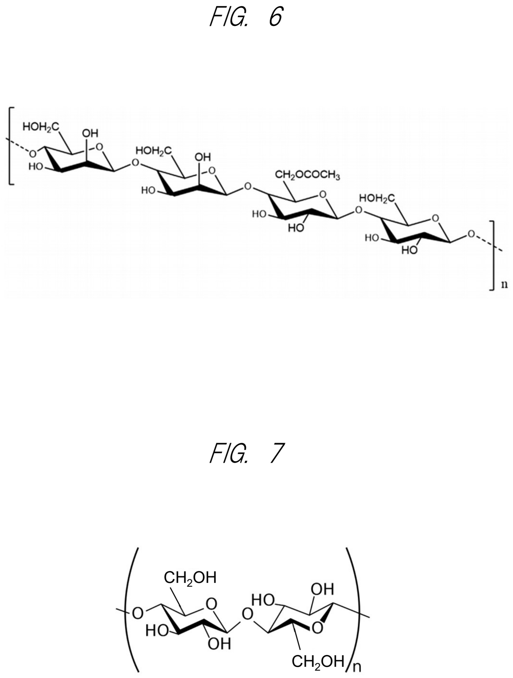

The glucomannan is a water-soluble polysaccharide contained at a rate of about 10% in a stem tuber of konjac yam, and can be extracted by distilling konjac powder with alcohol. The glucomannan is a polysaccharide having a chemical structure illustrated in FIG. 6 and containing D-glucose and D-mannose joined with β-1,4 bond at a ratio of 1 : 1.6 ("n" indicates the number of repetitions of a unit structure). The glucomannan has one branch per 50 to 60 sugars and a large molecular weight that may be more than 1,000,000.

The glucomannan used here preferably has a molecular weight in a range of 20 to 2,000,000. The glucomannan having such a molecular weight has a viscosity of 1000 to 20000 mPa·s when being added with 1 % by mass to water and melted.

Alternatively, the glucomannan has a large number of hydroxyl groups, and is dissolved by using alcohol as a solvent to easily have a low viscosity.

The cellulose-based material is cellulose or a material partially containing cellulose. The cellulose is a naturally-existing polymer in which a large number of β-glucose molecules are linearly polymerized by a glycosidic bond, and is a carbohydrate (polysaccharide) having a chemical structure illustrated in FIG. 7 and being represented by a molecular formula (C₆H₁₀O₅) ₙ. This cellulose-based material is also, for example, carboxymethylcellulose, cellulose nanofiber or the like.

The cellulose-based material used here preferably has a molecular weight in a range of 2000 to 200,000. The cellulose-based material having such a molecular weight has a viscosity of 10 to 5000 mPa·s when being added with 1 % by mass to water and melted.

Alternatively, the cellulose-based material has a large number of hydroxyl groups, and is dissolved by using alcohol as a solvent to easily have a low viscosity.

The gelatin is fibrous protein collagen, and the agar is obtained by freezing and drying a solidified mucus of red algae, and is insoluble in water as it is, but is melted by heating to have a low viscosity.

Further, the above-described liquid material can also contain a filler. The filler to be used is, for example, inorganic material such as alumina, silica, aluminum hydroxide, and boehmite, cellulose (including a cellulose nanofiber), carbon fiber, carbon nanotube, carbon nanofiber, graphene, fullerene, aramid fiber or the like. As the cellulose to be used, a cellulose in which a hydrophilic group is substituted with a hydrophobic group may be used.

### (Fourth Embodiment)

### <Sheet>

The sheet of the present embodiment is made of a sheet-shaped molded body configured by using the above-described liquid material having the low viscosity. The liquid material having the low viscosity is obtained by the melting of the raw material or the dissolution of the raw material in the solvent as described above. The raw material preferably contains at least one type selected from the glucomannan, the cellulose-based material, the gelatin, and the agar.

This sheet may be the sheet-shaped molded body itself, or a material obtained by performing various treatments to the surface of the sheet-shaped molded body. A thickness of the sheet can be an optional thickness, and is, for example, preferably 10 µm to 5 mm, more preferably 20 µm to 3 mm.

Alternatively, this sheet-shaped molded body can be formed into a sheet having a multilayer structure in which two or more layers are stacked. In the case, all the layers may be the sheet of the present embodiment. Alternatively, some of the layers may be the sheet of the present embodiment while the other layers may be stacked as a sheet other than the sheet of the present embodiment. That is, the sheet may have one or more layers of the sheet-shaped molded body used in the present embodiment.

A case where the glucomannan is used as the raw material of this sheet will be specifically described. First, the glucomannan manufactured by "NOW Foods" company is prepared, and the glucomannan of 0.5 wt% is added to water and melted, thereby providing the liquid material having the viscosity of 10000 mPa·s. Here, the liquid material having the above-described viscosity is provided without using the solvent. Accordingly, the liquid material can be formed from the glucomannan alone.

The sheet 50 is manufactured from the liquid material provided by heating as described above, by using, for example, the sheet manufacturing apparatus 10 illustrated in FIG. 1. At this time, a sheet-shaped base material having its surface having the silicone-based release agent layer and being made of polyethylene (PE) having a width of 40 cm and a thickness of 0.5 mm is used as the base material BM. The base material BM is fed at a carry speed of 0.1 m/s. Then, from the coater 13 (die coater) having a slit width of 1 mm from which the liquid material LM is discharged, the liquid material LM is applied onto the base material at a discharge amount of 3000 mL/min.

The sheet-shaped liquid material SLM is carried by the feeding roll 19 while being solidified by natural cooling at room temperature to provide the stacked body made of the sheet 50 and the base material BM, and the sheet 50 is peeled from the base material BM by the peeling member 15. The peeled sheet 50 having a thickness of 0.5 µm is wound up by the sheet winder 16 to provide the roll-shaped sheet 50.

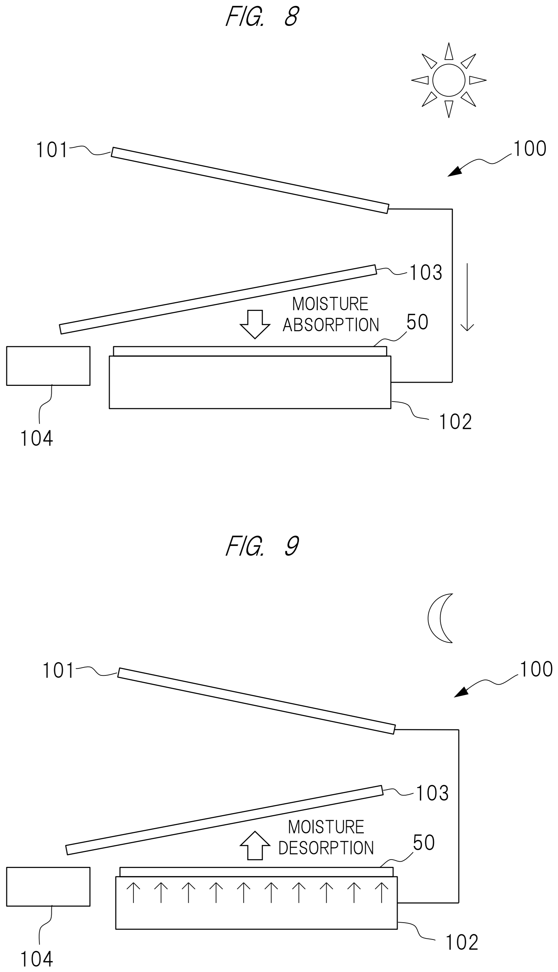

The sheet made of the glucomannan provided as described above can be used as a water-absorbing sheet to which the moisture absorbency of the raw material is applied. An example of use of this water-absorbing sheet will be described with reference to FIGs. 8 and 9. In these drawings, an arrow indicates movement of heat energy.

FIGs. 8 and 9 respectively illustrate examples of a case where the sheet 50 made of the glucomannan is applied as the water-absorbing sheet while using sunlight. A moisture collection apparatus 100 illustrated here includes a heat collector 101, a heat storage tank 102, an inclined plate 103, and a moisture collection container 104.

The heat collector 101 is an apparatus capable of, for example, extracting heat energy from sunlight and moving the heat energy to the heat storage tank 102. The heat storage tank 102 is a portion that stores heat collected by the heat collector 101, and the stored heat can be used to heat the sheet 50 at a desired timing. The inclined plate 103 is a plate-shaped body arranged on an upper side of the sheet 50 while inclining. This inclined plate 103 cools and liquefies moisture released from the sheet 50, and guides the moisture to the moisture collection container 104. The moisture collection container 104 is a container that stores the liquefied water guided into the inclined plate 103.

This moisture collection apparatus 100 is, for example, used as follows. First, as illustrated in FIG. 8, during the day, the heat energy of sunlight is collected by the heat collector 101, and the heat energy collected here is stored in the heat storage tank 102. Here, the sheet 50 is exposed to an external atmosphere, and absorbs moisture (water vapor) contained in the air. The sheet 50 made of the glucomannan has excellent hygroscopicity as described above, and can retain much moisture.

Then, at night after sunset, as illustrated in FIG. 9, the heat energy stored in the heat storage tank 102 is used to heat the sheet 50. The heating is set at a temperature at which the moisture absorbed in the sheet 50 is released (desorbed), and is preferably, for example, 80 to 100°C. Here, the moisture released from the sheet 50 is diffused upward, and is in contact with the inclined plate 103, and is liquefied on its surface. The liquefied moisture flows along the inclination of the inclined plate 103 to a lower side of the inclined plate 103, is guided into the moisture collection container 104, and is finally stored in the moisture collection container 104.

In the foregoing, the present invention has been concretely described based on the embodiments and the examples. However, it is needless to say that the present invention is not limited to the foregoing embodiments and examples, and various modifications can be made within the scope of the present invention.

### EXPLANATION OF REFERENCE CHARACTERS

10, 20, 30, 40 sheet manufacturing apparatus
11 raw material container
12 base material carry-out part
13 coater
14, 32 solidification region
15, 33 peeling member
16 sheet winder
17 base material winder
18 back roll
19 feeding roll
21, 41, 42 drying processing part
31, 31a, 31b, 31c heating roll
50 sheet
BM base material
LM liquid material
SLM sheet-shaped liquid material

## Claims

1. A sheet manufacturing method comprising steps of:
(a) adjusting a liquid material containing a raw material and having a viscosity of 100000 mPa·s or less;
(b) after the step (a), applying the liquid material to have a sheet shape by a coater to form a coating body;
(c) after the step (b), solidifying the coating body, thereby providing a sheet; and
(d) after the step (c), winding up the sheet.

2. The sheet manufacturing method according to claim 1,
wherein in the step (b), the liquid material is applied to have a sheet shape onto a base material.

3. The sheet manufacturing method according to claim 2,
wherein after the step (c) and before the step (d), the sheet is peeled from the base material.

4. The sheet manufacturing method according to claim 3,
wherein a silicone-based or non-silicone-based release agent is applied onto a surface of the base material.

5. The sheet manufacturing method according to claim 1,
wherein in the step (b), the liquid material is applied to have a sheet shape onto a heating roll.

6. The sheet manufacturing method according to claim 5,
wherein the coating body applied on the heating roll is dried while passing through another heating roll.

7. The sheet manufacturing method according to claim 1,
wherein a powdery filler containing at least one type selected from glucomannan, cellulose-based material, gelatin, and agar is used as the raw material.

8. The sheet manufacturing method according to claim 1,
wherein the liquid material contains the raw material and a solvent, and
the step (c) includes a drying processing step for vaporizing the solvent by heating.

9. The sheet manufacturing method according to claim 8,
wherein the solvent is water or alcohol.

10. A sheet manufacturing apparatus comprising:
a raw material container in which a liquid material containing a raw material and having a viscosity of 100000 mPa·s or less is adjusted and stored;
a base material carry-out part feeding a base material;
a coater applying the liquid material to have a sheet shape onto the base material fed from the base material carry-out part;
a solidification region in which a coating body applied on the base material is solidified to form a sheet;
a peeling member arranged at a post stage of the solidification region and used for peeling the sheet from the base material; and
a sheet winder winding up the sheet peeled from the base material.

11. A sheet manufacturing apparatus comprising:
a raw material container in which a liquid material containing a raw material and having a viscosity of 100000 mPa·s or less is adjusted and stored;
a coater applying the liquid material to have a sheet shape onto a heating roll;
a solidification region in which a coating body applied on the heating roll is solidified to form a sheet;
a peeling member peeling the sheet from the heating roll in the solidification region; and
a sheet winder winding up the sheet peeled from the heating roll.

12. The sheet manufacturing apparatus according to claim 10 or 11,
wherein the solidification region includes a drying processing part vaporizing a solvent in the sheet by heating.

13. The sheet manufacturing apparatus according to claim 10 or 11,
wherein the liquid material contains the raw material and a solvent, and
the solidification region includes a collector collecting the vaporized solvent.

14. A sheet comprising:
a sheet-shaped molded body containing at least one type selected from glucomannan, cellulose-based material, gelatin, and agar.

15. The sheet according to claim 14,
wherein the sheet has a multilayer structure in which two or more layers are stacked, and has one or more layers of the sheet-shaped molded body.
